# EUROPEAN PATENT SPECIFICATION

(11) **EP 3 026 745 B1**
(45) Date of publication and mention of the grant of the patent: **04.07.2018**
(21) Application number: 14830322.5
(22) Date of filing: 24.07.2014
(51) Int. Cl.: H01M 8/06, C25B 1/10, C25B 9/00, C25B 9/04, C25B 11/04, C25B 15/08, H01M 8/00, H01M 8/04, H01M 8/12, H01M 8/24, C25B 1/12, H01M 8/0612, H01M 8/0656, H01M 8/2425, H01M 8/04007, H01M 8/04228, H01M 8/04225, H01M 8/2484, H01M 8/2457

(54) **HYBRID DEVICE AND HYBRID SYSTEM**
HYBRIDE VORRICHTUNG UND HYBRIDES SYSTEM
DISPOSITIF ET SYSTÈME HYBRIDE

(30) Priority: 24.07.2013 JP 2013153688
(43) Date of publication of application: 01.06.2016
(73) Proprietor: Kyocera Corporation, Kyoto-shi, Kyoto 612-8501 (JP)
(72) Inventor: ONO,Takashi, Kyoto-shi Kyoto 612-8501 (JP); SHIRAISHI,Shinpei, Kyoto-shi Kyoto 612-8501 (JP); TAKAHASHI,Naruto, Kyoto-shi Kyoto 612-8501 (JP); UCHI,Kazutaka, Kyoto-shi Kyoto 612-8501 (JP)
(74) Representative: Viering, Jentschura & Partner mbB Patent- und Rechtsanwälte
(86) International application number: PCT/JP2014/069613
(87) International publication number: WO 2015/012372

(56) References cited:
- JP-A- H06 163 064
- JP-A- 2005 093 222
- JP-A- 2009 070 585
- JP-A- 2010 287 502
- JP-A- 2011 249 161
- JP-A- 2012 094 417
- JP-A- 2013 030 359
- US-A1- 2004 180 249
- US-A1- 2006 222 912
- US-A1- 2009 104 486

## Description

### Technical Field

The present invention relates to a hybrid device that includes an electrolysis cell stack device and a fuel cell stack device, and a hybrid system including the hybrid device.

### Background Art

In recent years, fuel cell stack devices in which a plurality of solid oxide fuel cells (SOFCs) capable of generating electrical power using a fuel gas (hydrogen-containing gas) and an oxygen-containing gas (air) are arranged have been proposed as next-generation energy sources.

At the same time, a high temperature water-vapor electrolysis method that uses an electrolysis cell that includes a solid oxide electrolyte membrane (SOEC) has been proposed as another method for manufacturing hydrogen.

Furthermore, solid electrolyte fuel cell power generation equipment including a combination of the solid oxide fuel cell (SOFC) and the solid-oxide electrolysis cell (SOEC) has also been proposed (refer to Patent Document 1, for example).

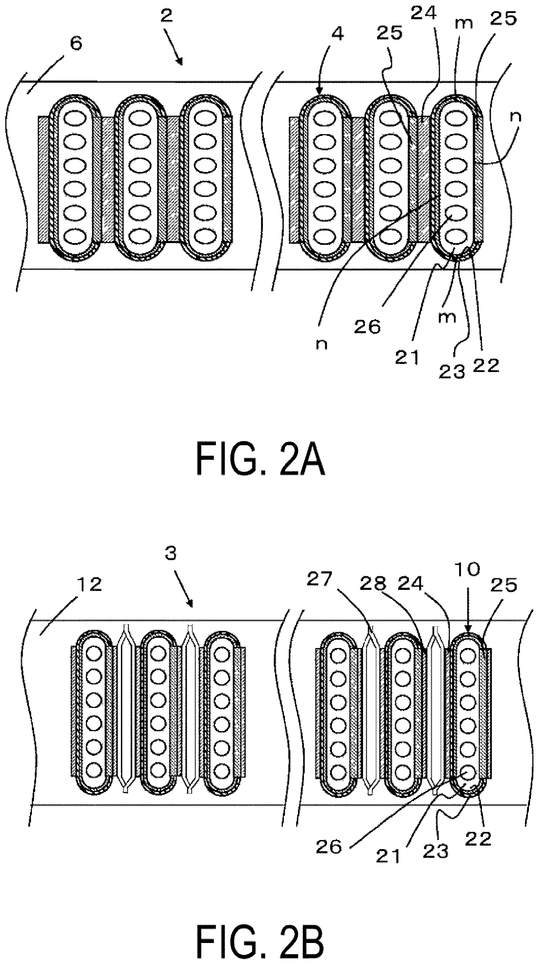

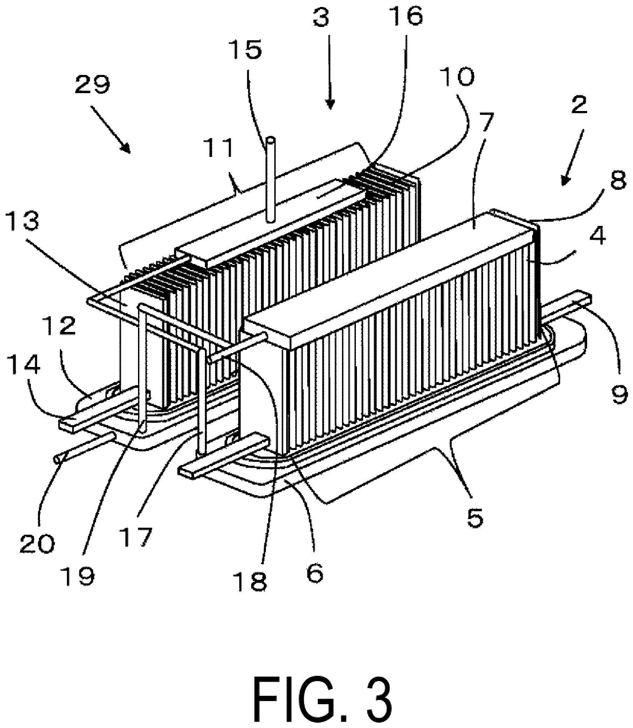

US 2006/222912 A1 discloses that a modular, regenerative fuel cell system comprises (a) one or more electrolysis cell fluid modules, (b) one or more electrolysis cell stack modules, (c) one or more fuel cell fluid modules, and (d) one or more fuel cell stack modules (cf. claim 5, Figs. 2 and 3)

JP 2009-070585 A discloses a method of operating a fuel cell system comprising a fuel cell stack, a reformer for generating a reformed gas to be supplied to the fuel cell stack, and a steam generator for generating steam by vaporizing reforming water in order to supply to the reformer, wherein when the fuel cell system is started up, the reforming water is electrolyzed at the steam generator to generate hydrogen and the hydrogen is supplied to the fuel cell stack (cf. claim 5).

Patent Literature 1: Japanese Unexamined Patent Application Publication No. H11-214021A

### Summary of Invention

### Technical Problem

Nevertheless, in Patent Document 1, the combination of the solid oxide fuel cell (SOFC) and the solid-oxide electrolysis cell (SOEC) is merely described as a block diagram without suggesting a specific configuration, resulting in the need for equipment having greater efficiency.

Therefore, an object of the present invention is to provide a hybrid device including a combination of an electrolysis cell stack device and a fuel cell stack device and has greater efficiency, and a hybrid system including the hybrid device.

### Solution to Problem

The present invention provides a hybrid device according to claim 1, a hybrid system according to claim 7 and a hybrid system according to claim 10. Further embodiments of the invention are described in the dependent claims.

### Advantageous Effects of Invention

The hybrid device of the present invention makes it possible to efficiently supply water vapor to the electrolysis cell stack device, improve a temperature distribution of the fuel cell stack device, enhance power generation efficiency, and thus achieve a hybrid device having favorable efficiency.

Furthermore, the hybrid system of the present invention makes it possible to achieve a hybrid system having improved reliability.

### Brief Description of Drawings

FIG. 1 is an exterior perspective view illustrating an example of a hybrid device of a present embodiment.
FIG. 2A is a plan view illustrating a portion extracted from an electrolysis cell stack device, and FIG. 2B is a plan view illustrating a portion extracted from a fuel cell stack device, which constitute the hybrid device of the present embodiment.
FIG. 3 is an exterior perspective view illustrating another hybrid device.
FIG. 4 is an exterior perspective view illustrating yet another example of the hybrid device of the present embodiment.
FIG. 5 is a cross-sectional view illustrating an example of the electrolysis cell stack device that constitutes the hybrid device illustrated in FIG. 4.
FIG. 6 is an exterior perspective view illustrating yet another example of the hybrid device of the present embodiment.
FIGS. 7A and 7B are block diagrams illustrating examples of a hybrid system of the present embodiment.
FIG. 8 is a flowchart related to the activation of the hybrid system of the present embodiment.

### Description of Embodiments

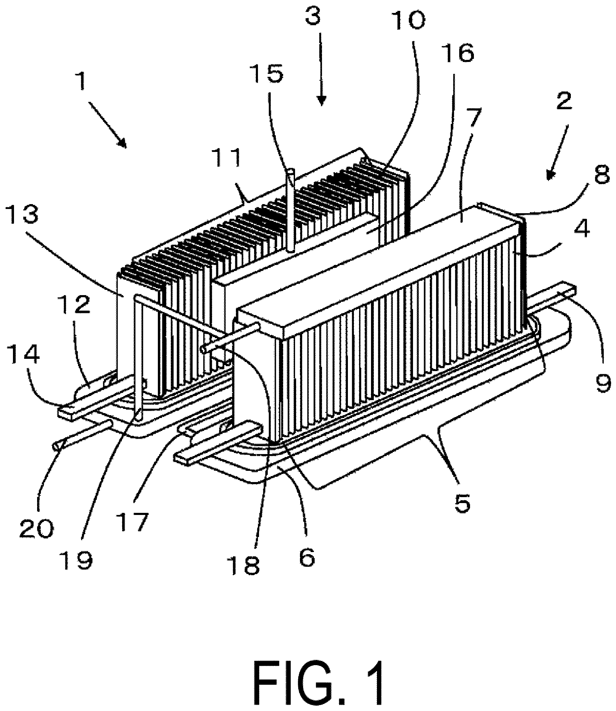

FIG. 1 is an exterior perspective view illustrating an example of a hybrid device of the present embodiment. It should be noted that, in the following description, identical components are denoted using the same symbols.

As illustrated in FIG. 1, a hybrid device 1 of the present embodiment includes a solid oxide electrolysis cell stack device 2 and a solid oxide fuel cell stack device 3.

Water vapor is supplied, and a current is allowed to flow (a voltage is applied) to the electrolysis cell stack device 2, thereby promoting an electrolysis reaction and generating a hydrogen-containing gas in the electrolysis cell stack device 2.

Meanwhile, a hydrogen-containing gas serving as a fuel gas is supplied to the fuel cell stack device 3, making it possible to generate electrical power through a power generation reaction in the fuel cell stack device 3.

Therefore, combining the electrolysis cell stack device and the fuel cell stack device makes it possible to obtain a hydrogen-containing gas as well as obtaining electrical power, and achieve a hybrid device having favorable efficiency.

The electrolysis cell stack device 2 includes an electrolysis cell stack 5 in which a plurality of electrolysis cells 4 are arranged uprightly in a row and electrically connected, and one end portion (lower end portion) of the electrolysis cells 4 that constitute the electrolysis cell stack 5 are fixed to a first manifold 6 formed of a metal or the like by an insulating bonding material (not illustrated) such as a glass sealing material. It should be noted that an end conductive member 8 that includes a conductive part 9 for applying a current to the electrolysis cell stack 5 (electrolysis cells 4) is disposed on both end portions of the electrolysis cell stack 5.

Further, the other end portion (upper end portion) of the electrolysis cell stack 5 (a plurality of electrolysis cells 4) is fixed to a second manifold 7 formed of a metal or the like by an insulating bonding material (not illustrated) such as a glass sealing material. In this electrolysis cell stack device 2, a gas is supplied to the electrolysis cells 4 to generate hydrogen through the electrolysis reaction. Then, the hydrogen-containing gas is collected by the second manifold 7. That is, the second manifold 7 itself serves as a collecting part. The hydrogen-containing gas collected by the second manifold 7 is not only led out through a gas lead-out pipe 18, but also supplied, through a gas lead-in pipe 19, to the fuel cell stack device 3 that is disposed adjacent to the electrolysis cell stack device 2. In other words, the second manifold 7 of the electrolysis cell stack device 2 and a manifold 12 of the fuel cell stack device 3 described later are connected by the gas lead-in pipe 19. This results in a configuration in which at least a portion of the hydrogen-containing gas generated by the electrolysis cell stack device 2 is supplied to the fuel cell stack device 3.

It should be noted that, although not illustrated, a valve is suitably provided in the gas lead-out pipe 18 or the gas lead-in pipe 19, and controlling the operation of this valve makes it possible to lead out the hydrogen-containing gas and to supply the hydrogen-containing gas to the fuel cell stack device 3. While described in detail later, vertically striped electrolysis cells 1 are provided as the electrolysis cells illustrated in FIG. 1. It should be noted that a conductive member may be disposed between the electrolysis cells 4 for the purpose of facilitating the flow of a current through the electrolysis cells 4.

Then, water vapor is supplied to the electrolysis cells 4, the electrolysis cells 4 are heated to a temperature of from 600 to 1000°C, and a current is applied so as to bring a voltage to a range of about 1.0 to 1.5 V (per electrolysis cell). This causes all or a portion of the water vapor supplied to the electrolysis cells 4 to decompose into hydrogen and oxygen through a reaction, indicated by the following reaction formula, at the cathodes and anodes of the electrolysis cells 4. It should be noted that the oxygen is discharged from the anode described later.
Cathode:

H₂O + 2e⁻ → H₂ + O²⁻

Anode:

O₂⁻ → 1/20₂ + 2e⁻

On the other hand, the fuel cell stack device 3 includes a fuel cell stack 11 in which a plurality of fuel cells 10 are arranged uprightly in a row and electrically connected, and one end portion (lower end portion) of the fuel cells 10 that constitute the fuel cell stack 11 is fixed to the manifold 12 formed of a metal or the like by an insulating bonding material (not illustrated) such as a glass sealing material. It should be noted that an end current collector 13 that includes a current extraction part 14 for leading out the current generated in the fuel cell stack 11 (fuel cells 10) is disposed on both end portions of the fuel cell stack 11. While described in detail later, vertically striped fuel cells 10 are provided as the fuel cells illustrated in FIG. 1.

Then, the hydrogen-containing gas (hydrogen-containing gas) and the oxygen-containing gas are supplied to the fuel cells 10, and the fuel cells 10 are heated to a temperature of from 600 to 1000°C, thereby causing the hydrogen-containing gas and the oxygen-containing gas supplied to the fuel cells 10 to generate electrical power through a reaction indicated by the following reaction formula, at the cathodes and anodes of the fuel cells 10. It should be noted that the hydrogen-containing gas not used in power generation is combusted on the other end portion side (upper end portion side) of the fuel cells 10, thereby making it possible to increase the temperature of the fuel cell stack 11 or maintain the fuel cell stack 11 at high temperature by the combustion heat.
Cathode:

I/20₂ + 2e⁻ → O₂⁻

Anode:

H₂ + O²⁻ → H₂O + 2e⁻

The electrolysis cell stack device 2 and the fuel cell stack device 3 significantly differ in configuration in that the second manifold 7 is disposed above the electrolysis cell stack device 2.

Furthermore, a vaporizer 16 for generating water vapor to be supplied to the first manifold 6 of the electrolysis cell stack device 2 is disposed near the fuel cell stack 11. It should be noted that, in FIG. 1, the vaporizer 16 is disposed in a middle portion in the arrangement direction of the fuel cells 10, and specifically is disposed at the side of the middle portion of the fuel cell stack 11 in the arrangement direction of the fuel cells 10 illustrated in FIG. 1, but is not limited thereto.

Here, a water introduction pipe 15 for introducing water supplied by a water supplying device into the vaporizer 16 is connected to an upper end of the vaporizer 16, while a water vapor inflow pipe 17 having one end connected to the vaporizer 16 and the other end connected to the first manifold 6 is connected to a lower end of the vaporizer 16. As a result, water vapor supplied through the water introduction pipe 15 and vaporized in the vaporizer 16 is supplied to the first manifold 6 of the electrolysis cell stack device 2 through the water vapor inflow pipe 17.

In the fuel cell stack device 3, a temperature distribution may occur with power generation. Here, the vaporizer 16 is disposed near the fuel cell stack device, thereby making it possible to improve this temperature distribution and suppress a decrease in power generation efficiency, in other words, improve the power generation efficiency, of the fuel cell stack device 3.

In particular, in the above-described fuel cell stack device 3, a temperature distribution in which the temperature of the middle portion in the arrangement direction of the fuel cells 10 increases and the temperatures of both end portions decrease may occur. Therefore, the vaporizer 16 is disposed in the middle portion in the arrangement direction of the fuel cells 10, making it possible to decrease the temperature of the middle portion and further improve the temperature distribution. This makes it possible to further improve the power generation efficiency. It should be noted that while FIG. 1 illustrates an example in which the vaporizer 16 is disposed between the electrolysis cell stack device 2 and the fuel cell stack device 3, the vaporizer 16 need only be disposed near the fuel cell stack device 3. The vaporizer 16 may be disposed on a side opposite to the electrolysis cell stack device 2, for example.

Furthermore, when the electrolysis cells 4 contain Ni, for example, supplying only water vapor to the electrolysis cells 4 may cause the Ni to be oxidized by the water vapor. The oxidation of the Ni causes a support body and an inner electrode layer (cathode) that contain the Ni to change in volume. Thus, an excessive stress is applied to a solid electrolyte, thereby damaging the solid electrolyte. As a result, cross leakage of the solid electrolyte occurs, significantly deteriorating the performance of the electrolysis cells 4. Therefore, to avoid this, a small amount of hydrogen is supplied in addition to the water vapor, making it possible to suppress oxidation of the electrolysis cells 4. Therefore, it is possible to suppress the oxidation of the electrolysis cells 4 by starting the generation of hydrogen by applying the current at the temperature that the efficiency of hydrogen generation is low in the electrolysis cell stack device 2, by connecting the hydrogen supply pipe for supplying hydrogen externally to the first manifold 6 or by supplying hydrogen together with water to the vaporizer 16.

Furthermore, while described in detail later, a fuel supply pipe 20 for supplying a raw fuel or a hydrogen-containing gas is connected to the manifold 12 of the fuel cell stack device 3 illustrated in FIG. 1. It should be noted that the fuel supply pipe 20 need only directly or indirectly supply the raw fuel to the manifold 12. For example, with the above-described water introduction pipe 15 made to a dual pipe with the fuel supply pipe 20, the raw fuel may be supplied to the manifold 12 via the vaporizer 16, the water vapor inflow pipe 17, the electrolysis cell stack 5, the second manifold 7, and the gas lead-in pipe 19. As described later, a reformer may be provided above the fuel cell stack device 3, and the fuel supply pipe 20 may be connected to the reformer to supply the raw fuel to the manifold 12 via the reformer. Examples of the raw fuel include a hydrocarbon-based gas.

The following describes the electrolysis cells 4 (electrolysis cell stack 5) and the fuel cells 10 (fuel cell stack 11) using FIGS. 2A and 2B.

FIG. 2A is a plan view illustrating a portion extracted from the electrolysis cell stack device, and FIG. 2B is a plan view illustrating a portion extracted from the fuel cell stack device, which constitute the hybrid device of the present embodiment.

In the hybrid device of the present embodiment, the electrolysis cells 4 and the fuel cells 10 may be formed of cells having substantially the same configuration, and therefore the respective cells will be described using the electrolysis cells 4. The fuel cells 10 will be additionally described only when differences between the electrolysis cells 4 and the fuel cells 10 arise.

The electrolysis cell 4, as illustrated in FIG. 2A, is a hollow flat plate-shaped fuel cell, and includes a porous conductive support body (hereinafter also referred to as support body) 21 having an overall elliptical column shape with a flat cross-section.

A plurality of distribution holes 26 are formed in the support body 21, extending through the support body 21 from one end to the other end in a length direction of the electrolysis cell 4, and the electrolysis cell 4 has a structure in which various members are provided on this support member 21. It should be noted that the distribution hole 26 preferably has a circular or elliptical shape in the cross-section of the electrolysis cell 4.

The support body 21 includes a pair of flat faces n parallel to each other, and a pair of side faces (arc-shaped portions) m each connecting the ends of the pair of flat faces n, as is clear from the shapes illustrated in FIG. 2A. The pair of flat faces n are substantially formed in parallel to each other, a porous inner electrode layer 22 (cathode) is provided so as to cover one of the flat faces n and both the side faces m, and a dense solid electrolyte layer 23 is stacked so as to cover this inner electrode layer 22. Furthermore, a porous outer electrode layer 24 (anode) is stacked on the solid electrolyte layer 23 so as to face the inner electrode layer 22, and a section in which the inner electrode layer 22, the solid electrolyte layer 23, and the outer electrode layer 24 overlap serves as an electrolysis element part. Furthermore, an interconnector 25 is stacked on the other flat face n on which neither the inner electrode layer 22 nor the solid electrolyte layer 23 is stacked.

Incidentally, in the fuel cells 10 illustrated in FIG. 2B, the inner electrode layer 22 functions as the anode and the outer electrode layer 24 functions as the cathode. Then, the section in which the inner electrode layer 22, the solid electrolyte layer 23, and the outer electrode layer 24 overlap serves as a power generating element part.

As is clear from FIG. 2A, the solid electrolyte layer 23 (and the inner electrode layer 22) extends through the arc-shaped side faces m that connect both ends of the flat faces n toward the other flat face n, and both end faces of the interconnector 25 come in contact with both end faces of the inner electrode layer 22 and both end faces of the solid electrolyte layer 23. It should be noted that both the end portions of the interconnector 25 may be disposed so as to be stacked on both the end portions of the solid electrolyte layer 23.

It should be noted that a cohesion layer for strongly bonding the interconnector 25 with the support body 21 may be provided between the interconnector 25 and the support body 21, and an anti-reaction layer for preventing a high-resistance reaction product from being formed by a reaction between constituents of the solid electrolyte layer 23 and the outer electrode layer 24 may be provided between the solid electrolyte layer 23 and the outer electrode layer 24.

Here, in the electrolysis cell 4, water vapor is allowed to flow through the distribution holes 26 located in the support body 21, the above-described predetermined operation temperature is applied, and the above-described predetermined voltage is applied across the inner electrode layer 22 and the outer electrode layer 24, making it possible to promote an electrolysis reaction. It should be noted that the voltage is applied by allowing the current to flow to the electrolysis cell 4 through the interconnector 25 stacked on the support body 21.

Meanwhile, in the fuel cell 10, hydrogen-containing gas is allowed to flow through the distribution holes 26 located in the support body 21 and the above-described predetermined operation temperature is reached, making it possible to promote a power generation reaction. It should be noted that the current generated by power generation in a fuel cell 10 flows to another fuel cell 10 adjacent with a current collection member 27 placed therebetween, through the interconnector 25 stacked on the support body 21.

In the fuel cell stack device 3 illustrated in FIG. 2B, the current collection member 27 is disposed between the fuel cells 10. The current collection member 27 has a space therein through which an oxygen-containing gas flows. It should be noted that the current collection member 27 and the interconnector 25 are bonded with each other by an electrically conductive adhesive 28.

The following describes components that constitute the electrolysis cell 4 and the fuel cell 10 one by one.

It is required that the support body 21 have permeability with respect to water vapor and a hydrogen-containing gas so as to allow water vapor and a hydrogen-containing gas to permeate to the solid electrolyte layer 23, and have conductivity to allow a current to flow through the interconnector 25. Therefore, for example, the support body 21 is preferably formed of an iron group metal component and a specific inorganic oxide (a rare earth element oxide, for example).

Examples of the iron group metal component include an iron group metal alone, an iron group metal oxide, an iron group metal alloy, or an iron group alloy oxide. To be more specific, examples of an applicable iron group metal include Fe, Ni, and Co. In particular, Ni and/or NiO are preferably contained as the iron group component or iron group metal oxide because of their inexpensiveness. It should be noted that the iron group metal may contain Fe and Co in addition to Ni and/or NiO. Furthermore, NiO is reduced by H₂, which is generated by the electrolysis reaction, to partially or entirely serve as Ni.

The rare earth element oxide is used to bring the thermal expansion coefficient of the support body 21 close to the thermal expansion coefficient of the solid electrolyte layer 23, and a rare earth element oxide that includes at least one element selected from a group consisting of Y, Lu, Yb, Tm, Er, Ho, Dy, Gd, Sm, and Pr may be used in combination with the above-described iron group component. Specific examples of such a rare earth element oxide include Y₂O₃, Lu₂O₃, Yb₂O₃, Tm₂O₃, Er₂O₃, Ho₂O₃, Dy₂O₃, Gd₂O₃, Sm₂O₃, and Pr₂O₃. Preferably, Y₂O₃ and Yb₂O₃ are used. This is because Y₂O₃ and Yb₂O₃ exhibit very little solid-solubility toward an iron group metal oxide, rarely react with an iron group metal oxide, are substantially equal to the solid electrolyte layer 23 in terms of thermal expansion coefficient, and are inexpensive.

Here, in order to maintain a favorable conductivity of the support body 21 and bring the thermal expansion coefficient of the support body 21 close to that of the solid electrolyte layer 23, the iron group metal component and the rare earth element oxide component preferably exist in a ratio by volume of from 35:65 to 65:35 based on the volume percentages after firing - reduction. It should be noted that, when Ni is used as the iron group metal component and Y₂O₃ is used as the rare earth element oxide component, the Ni and Y₂O₃ contents are preferably such that Ni/(Ni + Y) is from 79 to 93 mole%. Furthermore, any other metal component or oxide component may be added to the support body 21 so long as the required characteristics will not be impaired.

Moreover, since it is necessary for the support body 21 to permeate water vapor, the support body 21 generally and preferably has an open porosity greater than or equal to 30%, particularly in the range of from 35% to 50%. Furthermore, the conductivity of the support body 21 is preferably 50 S/cm or greater, more preferably 300 S/cm or greater, and even more preferably 440 S/cm or greater.

It should be noted that it is preferable that, in general, the length of the flat face n of the support body 21 (length in a width direction of the support body 21) be from 15 to 35 mm, the length of the side face m (length of the arc) be from 2 to 8 mm, and the thickness of the support body 21 (thickness between the pair of flat faces n) be from 1.5 to 5 mm.

The inner electrode layer 22, which is to promote an electrode reaction, is preferably formed of porous, electrically conductive ceramic which itself is known. For example, the inner electrode layer 22 may be formed from a ZrO₂ solid solution containing a rare earth element oxide or a CeO₂ solid solution containing a rare earth element oxide, and Ni and/or NiO. The rare earth element may be any one of the rare earth elements cited as the rare earth element used for the support body 21. For example, a ZrO₂ solid solution containing Y₂O₃ (YSZ) and Ni and/or NiO may be used as the material.

The content of a ZrO₂ solid solution containing a rare earth element oxide or a CeO₂ solid solution containing a rare earth element oxide and the content of Ni or NiO in the inner electrode layer 22 preferably exist in a ratio by volume from 35:65 to 65:35 based on volume percentages after firing - reduction. Furthermore, an open porosity of this inner electrode layer 22 is preferably 15% or greater, particularly in the range of from 20% to 40%, and the thickness thereof is preferably from 1 to 30 µm. For example, when the inner electrode layer 22 has too small a thickness, its performance capability may deteriorate. On the other hand, when the inner electrode layer 22 has too large a thickness, peeling or the like may occur between the solid electrolyte layer 23 and the inner electrode layer 22 due to a difference in thermal expansion.

Further, while the inner electrode layer 22 extends from the one flat face n (the flat face n positioned on the left side in the figure) through the side face m to the other flat face n (the flat face n positioned on the right side in the figure) in the example illustrated in FIG. 2A, the inner electrode layer 22 need only be formed in a position facing the outer electrode layer 24, allowing the inner electrode layer 22 to be formed only on the flat face n on the side in which the outer electrode layer 24 is provided, for example. That is, the structure may be such that the inner electrode layer 22 is provided only on the flat face n, and the solid electrolyte layer 23 is formed on the inner electrode layer 22, on both of the side faces m, and on the other flat face n on which the inner electrode layer 22 has not been formed.

The solid electrolyte layer 23 preferably formed of a dense ceramic made of partially stabilized or stabilized ZrO₂ containing a rare earth element oxide such as Y₂O₃, Sc₂O₃, or Yb₂O₃ in an amount of from 3 to 15 mol%. Further, the rare earth element is preferably Y from the standpoint of inexpensiveness. Furthermore, in order to prevent water vapor permeation, the solid electrolyte layer 23 preferably has a relative density (according to the Archimedes method) of 93% or greater, particularly 95% or greater, and preferably has a thickness of from 5 to 50 µm.

As described above, an anti-reaction layer may be provided between the solid electrolyte layer 23 and the outer electrode layer 24 which is described later. The anti-reaction layer is provided in order to strongly bond the solid electrolyte layer 23 with the outer electrode layer 24 and prevent a reaction product with a high electrical resistance from being formed by a reaction between a constituent of the solid electrolyte layer 23 and a constituent of the outer electrode layer 24.

The anti-reaction layer may be formed by a composition that contains Cerium (Ce) and other rare earth element. The anti-reaction layer preferably has a composition expressed by, for example, (CeO₂)₁₋ₓ (REO_{1.5})ₓ, where RE represents at least one of SM, Y, Yb, and Gd, and x represents a number satisfying 0 < x ≤ 0.3. Furthermore, in order to reduce electrical resistance, Sm or Gd is preferably used as RE. For example, the anti-reaction layer preferably contains a CeO₂ solid solution containing 10 to 20 mol% of SmO_{1.5} or GdO_{1.5}.

The anti-reaction layer may also be formed of two layers in order to strongly bond the solid electrolyte layer 23 with the outer electrode layer 24 and further prevent a reaction product having a high electrical resistance from being formed by a reaction between a constituent of the solid electrolyte layer 23 and a constituent of the outer electrode layer 24.

The outer electrode layer 24 may be formed of a conductive ceramic containing so-called "ABO₃ perovskite oxide". Examples of such a perovskite oxide preferably include a perovskite transition metal oxide, and particularly at least one of an LaMnO₃-based oxide, an LaFeO₃-based oxide, and an LaCoO₃-based oxide containing Sr and La in the A site. From the standpoint of having high electric conductivity at operation temperatures in the range of about from 600 to 1000° C, an LaCoO₃-based oxide is particularly preferred. It should be noted that, in the above-described perovskite-type oxide, Sr and La may exist in the A site, and cobalt (Co), iron (Fe), and manganese (Mn) may exist in the B site.

The outer electrode layer 24 must be permeable to oxygen gas. Accordingly, the electrically conductive ceramic (perovskite oxide) that forms the outer electrode layer 24 preferably has an open porosity of 20% or greater, particularly in the range of from 30 to 50%. Furthermore, the outer electrode layer 24 preferably has a thickness of from 30 to 100 µm from the viewpoint of the conductivity of the electrolysis cells 4 and the fuel cells 10.

Further, the interconnector 25 is stacked on the flat face n opposite to the outer electrode layer 24 side of the support body 21.

The interconnector 25 is preferably formed of an electrically conductive ceramic. Since the interconnector 25 comes in contact with the hydrogen-containing fluid and the oxygen-containing fluid, the interconnector 25 must be resistant to reduction and oxidation. Accordingly, for such an electrically conductive ceramic having reduction resistance and oxidation resistance, it is generally preferable that a lanthanum chromite-based perovskite oxide (LaCrO₃-based oxide) be used. Furthermore, an LaCrMgO₃-based oxide containing Mg in the B site is preferably used particularly from the viewpoint of bringing the thermal expansion coefficient of the interconnector 25 close to the thermal expansion coefficients of the support body 21 and the solid electrolyte layer 23. It should be noted that the amount of Mg may be suitably adjusted so that the thermal expansion coefficient of the interconnector 25 is close to the thermal expansion coefficients of the support body 21 and the solid electrolyte layer 23, specifically from 10 to 12 ppm/K.

A cohesion layer for reducing, for example, the difference in thermal expansion coefficient between the interconnector 25 and the support body 21 as described above may also be provided between the support body 21 and the interconnector 25.

Such a cohesion layer may have a composition similar to that of the inner electrode layer 22. For example, the cohesion layer may be formed from at least one of a rare earth element oxide, a ZrO₂ solid solution containing a rare earth element oxide, and a CeO₂ solid solution containing a rare earth element oxide, and Ni and/or NiO. More specifically, the cohesion layer may be formed from:, for example, a composition containing Y₂O₃, and Ni and/or NiO; a composition containing a ZrO₂ solid solution containing Y₂O₃ (YSZ), and Ni and/or NiO; or a composition containing a CeO₂ solid solution containing an oxide of Y, Sm, Gd, or the like, and Ni and/or NiO. The content of a ZrO₂ solid solution containing a rare earth element oxide or a CeO₂ solid solution containing a rare earth element oxide and the content of Ni or NiO preferably exist in a ratio by volume of from 40:60 to 60:40 based on volume percentages after firing - reduction.

It should be noted that, in the electrolysis cell stack device 2 illustrated in FIG. 2A, the outer electrode layer 24 of one electrolysis cell 4 is bonded to the interconnector 25 of another electrolysis cell 4 that is adjacent to the one electrolysis cell 4, and thus the electrolysis cells 4 are electrically connected to one another. Furthermore, the interconnector 25 of one electrolysis cell 4 and the outer electrode layer 24 of another electrolysis cell 4 need only be electrically connected with each other. For example, the interconnector 25 and the outer electrode layer 24 may be electrically connected with the current collection member (electrically conductive member) 27 placed therebetween as illustrated in FIG. 2B.

In such an electrolysis cell stack 5, using electrolysis cells 4 that have no outer electrode layer 24 formed thereon, a paste that forms an outer electrode layer 24 is applied to the interconnector 25 of one electrolysis cell 4, the paste that forms an outer electrode layer 24 is applied to the solid electrolyte layer 23 of another electrolysis cell 4 adjacent to the one electrolysis cell 4, the two faces having the paste applied thereto are attached to each other, and then a heat treatment is applied to the faces, thereby allowing the interconnector 25 of the one adjacent electrolysis cell 4 and the outer electrode layer 24 of another electrolysis cell 4 to be directly bonded and electrically connected with each other.

The outer electrode layer 24, having a predetermined porosity as described above, has many pores communicating therethrough so as to form a gas-flow passage therein, which makes it possible to release the oxygen generated by the electrolysis reaction outside the outer electrode layer 24 through the gas-flow passage formed in the outer electrode layer 24. Therefore, with a simpler structure, it is possible to discharge the gas from the electrolysis cells 4 and electrically connect the plurality of electrolysis cells 4.

Further, in the fuel cell stack device 3 illustrated in FIG. 2B, the electrically conductive adhesive 28 that bonds the interconnector 25 of one fuel cell 10 with the current collection member 27 need only have electrical conductivity. For example, the electrically conductive adhesive 28 may be formed from the same material as the outer electrode layer 28.

FIG. 3 is an exterior perspective view illustrating another hybrid device.

A hybrid device 29 illustrated in FIG. 3, compared to the hybrid device 1 illustrated in FIG. 1, differs in that the vaporizer 16 is disposed above the fuel cells 10 and in the middle portion of the fuel cell stack device 3 in the arrangement direction of the fuel cells 10.

Disposing the vaporizer 16 above the fuel cells 10 makes it possible to efficiently vaporize, above the fuel cells 10, water supplied to the vaporizer 16 into water vapor using the combustion heat generated by combusting the hydrogen-containing gas not used in power generation. As a result, the water vapor can be efficiently supplied to the electrolysis cell stack device 2.

Further, the vaporizer 16 is disposed in the middle portion of the fuel cell stack device 3 in the arrangement direction of the fuel cells 10, making it possible to decrease the temperature of the middle portion of the fuel cell stack device 3. This improves the temperature distribution, and improves the power generation efficiency.

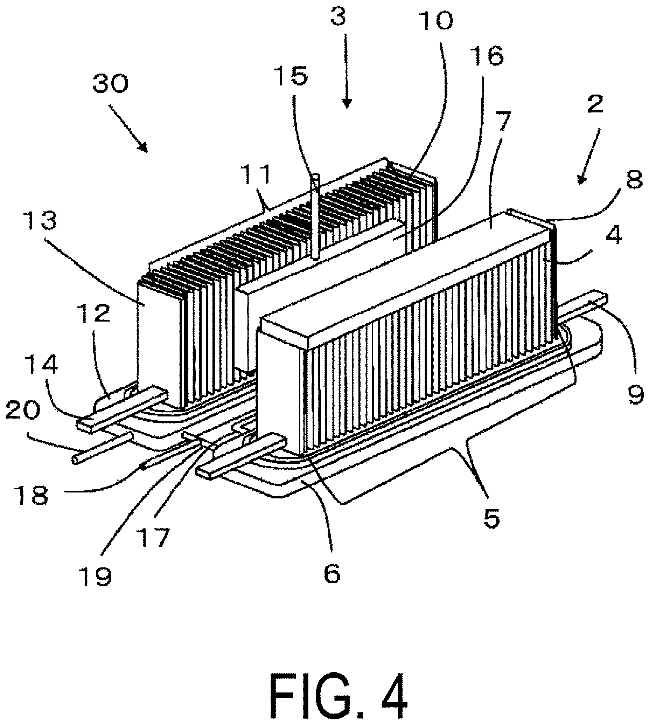

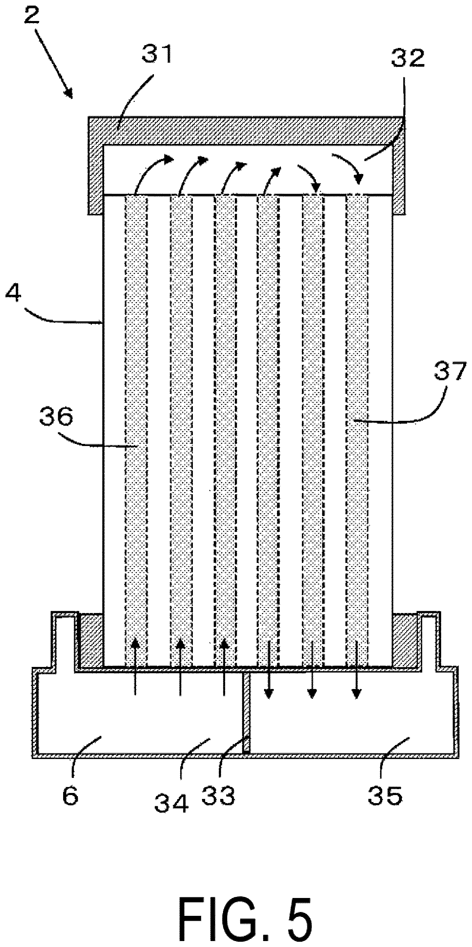

FIG. 4 is an exterior perspective view illustrating yet another example of the hybrid device of the present embodiment, and FIG. 5 is a cross-sectional view of an electrolysis cell stack device that constitutes the hybrid device illustrated in FIG. 4.

In contrast to the configuration of the hybrid devices illustrated in FIG. 1 and FIG. 3 in which the water vapor supplied to the first manifold 6 flows through the distribution holes 26 from one end (lower end) to the other end (upper end) of the electrolysis cells 4 and the water vapor is collected into the second manifold 7, in a hybrid device 30 illustrated in FIG. 4, each of the electrolysis cells 4 includes two or more distribution holes 26, with one of the distribution holes 26 serving as a forward passage side distribution hole 36 and the other distribution hole 26 serving as a return passage side distribution hole 37, looping back the flow in the electrolysis cell 4 via a second manifold 31.

As illustrated in FIG. 5, the second manifold 31 includes a space 32 for distributing the fluid that has passed through the forward passage side distribution hole 36 to the return passage side distribution hole 37 on the other end portion (upper end portion) of the electrolysis cell 4 illustrated in FIG. 1.

Meanwhile, in the interior of the first manifold 6, the left side as viewed from the front in FIG. 5 serves as a supply part 34 of fluid (mainly water vapor-containing gas), and the right side serves as a collecting part 35 of fluid (mainly hydrogen-containing gas), and these are partitioned by a partitioning member 33.

Then, a lower end of the forward passage side distribution hole 36 provided in the electrolysis cell 4 and the supply part 34 communicate with each other and, as a result, a portion or all of the water vapor supplied to the supply part 34 promotes an electrolysis reaction while flowing upward through the forward passage side distribution hole 36, thereby forming a hydrogen-containing gas.

Then, the hydrogen generated by the electrolysis reaction and the water vapor-containing gas not used in the reaction continue to flow from above the forward passage side distribution hole 36 to the space 32 in the second manifold 31. That is, the second manifold 31 serves as a manifold through which the hydrogen-containing gas flows. Then, the fluid that has flowed to the space 32 continues to flow to the return passage side distribution hole 37, and flows downward through the return passage side distribution hole 37.

Meanwhile, a lower end of the return passage side distribution hole 37 communicates with the collecting part 35. As a result, after flowing through the space 32 to the return passage side distribution hole 37 and then downward through the return passage side distribution hole 37, the fluid flows to the collecting part 35. The fluid that has flowed to the collecting part 35 is thus collected, making it possible to efficiently collect the hydrogen-containing gas. That is, in the hybrid device 30 illustrated in FIG. 4, the first manifold 6 of the electrolysis cell stack device 2 is a manifold that includes a supply part to which water vapor is supplied, and a collecting part that collects the hydrogen-containing gas. It should be noted that a portion or all of the water vapor contained in the fluid that has not promoted a reaction can promote an electrolysis reaction and generate hydrogen while flowing downward through this return passage side distribution hole 37.

Further, the shaded section on a top face of the first manifold 6 in FIG. 5 illustrates an insulating bonding material for fixing the electrolysis cells 4 and the first manifold 6.

Further, an inner face of the second manifold 31 may be circular arc shaped to ensure that the hydrogen-containing gas that has flowed through the forward passage side distribution hole 36 efficiently flows to the return passage side distribution hole 37.

Furthermore, the second manifold 31 may cover the electrolysis cell stack 5 in its entirety, or may be provided on the upper end of each of the electrolysis cells 4.

Such a hybrid device is capable of efficiently generating water vapor-containing gas in the electrolysis cell stack device 2 and efficiently generating power in the fuel cell stack device 3, making it possible to achieve a hybrid device having favorable efficiency.

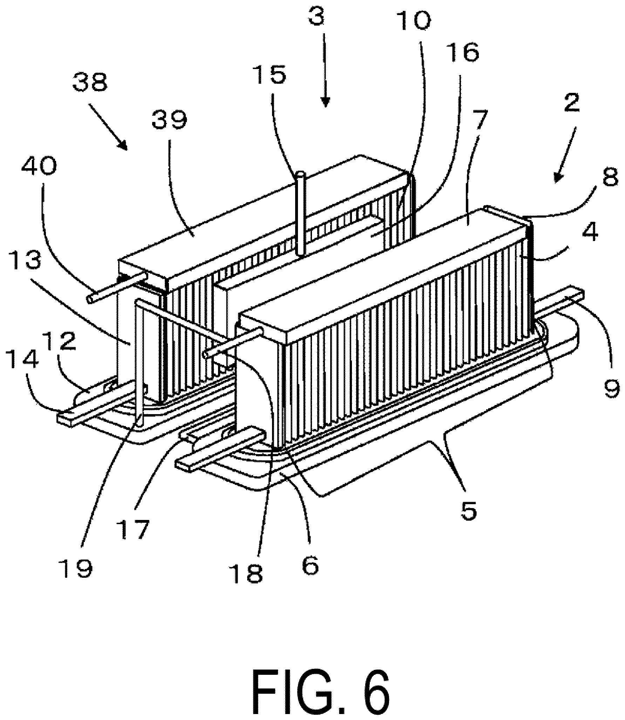

FIG. 6 is an exterior perspective view illustrating yet another example of the hybrid device of the present embodiment. Compared to the hybrid device 1 illustrated in FIG. 1, this hybrid device differs in that a reformer 39 that reforms a raw fuel is provided near the other end of the fuel cell stack device in the fuel cell stack device 3.

While, in the above-described hybrid devices, a portion of the hydrogen-containing gas generated by the electrolysis cell stack device 2 can be supplied to the fuel cell stack device 3, a significant amount of the hydrogen-containing gas may be externally extracted according to external requirements, decreasing the amount of the hydrogen-containing gas that can be supplied to the fuel cell stack device 3. Here, in the fuel cell stack device 3, the reformer 39 that reforms a raw fuel is provided near the other end of the fuel cell stack, making it possible to continue power generation by the fuel cell stack device 3 in a stable manner. As a result, the hybrid device 38 having further improved efficiency can be achieved.

It should be noted that a reformer capable of reforming water vapor with favorable reformation efficiency is preferably used as the reformer 39, and the reformer 39 preferably includes a vaporizing unit that vaporizes water and a reforming unit that includes a reforming catalyst. Further, a raw fuel supply pipe 40 for supplying a raw fuel such as a hydrocarbon gas is connected to the reformer 39.

Further, combustion heat generated by combusting excess hydrogen-containing gas not used in power generation can efficiently increase the temperature of the reformer 39 above the fuel cells 10, making it possible to shorten the activation time of the reformer 39 and improve reformation efficiency.

It should be noted that while FIG. 6 illustrates an example in which the reformer 39 capable of reforming water vapor and the vaporizer 16 are separately provided, a configuration in which the vaporizing unit of the reformer 39 is commonly used, and the water vapor is supplied to the electrolysis cell stack device 2 by the vaporizing unit provided in the reformer 39 is also possible, for example.

Furthermore, while not illustrated in the figure, the hydrogen-containing gas generated by a reformation reaction in the reformer 39 is supplied to the manifold 12 through a fuel supply pipe that connects the reformer 39 with the manifold 12 of the fuel cell stack device 3. It should be noted that, at activation, the raw fuel, which has been supplied until the start of the reformation reaction of the reformer 39 is continuously supplied to the manifold 12. The raw fuel passes through the fuel cells 10 and then combusts above the fuel cells 10. Therefore, the fuel supply pipe that connects the reformer 39 with the manifold 12 of the fuel cell stack device 3 plays the role of the fuel supply pipe 20 illustrated in FIG. 1.

Meanwhile, because the hydrogen-containing gas flows in the second manifolds 7, 31 of the above-described electrolysis cell stack device 2, the inner faces of the second manifolds 7, 31 preferably have shapes with a predetermined distance to the other end (upper end) of the electrolysis cells 4.

Further, the first manifold 6 and the second manifolds 7, 31 can be made of a material having thermal resistance, such as a ceramic, or a metal. However, when the first manifold 6 and the second manifolds 7, 31 are formed of a metal, the first manifold 6 and the second manifolds 7, 31 are preferably insulated from the electrolysis cells 4. Therefore, for example, the first manifold 6 and the second manifolds 7, 31 are preferably disposed spaced apart from the electrolysis cells 4 and fixed to the electrolysis cells 4 with an insulating adhesive such as glass. Further, in order to prevent the inner faces of the second manifolds 7, 31 from coming in contact with the electrolysis cells 4, an insulating annular or tubular member is preferably disposed on the other end (upper end) of the electrolysis cells 4 and an insulating coating is applied to the inner faces of the second manifolds 7, 31, so as to insulate the second manifolds 7, 31 from the electrolysis cells 4. This makes it possible to prevent a fluid such as the water vapor or hydrogen-containing gas that flows through the distribution holes 26 from leaking while maintaining the insulation of the first manifold 6 and the second manifolds 7, 31 from the electrolysis cells 4. It should be noted that when the insulating annular or tubular member is disposed between the second manifolds 7, 31 and the electrolysis cells 4, the inside of the annular or tubular shape serves as the space 32.

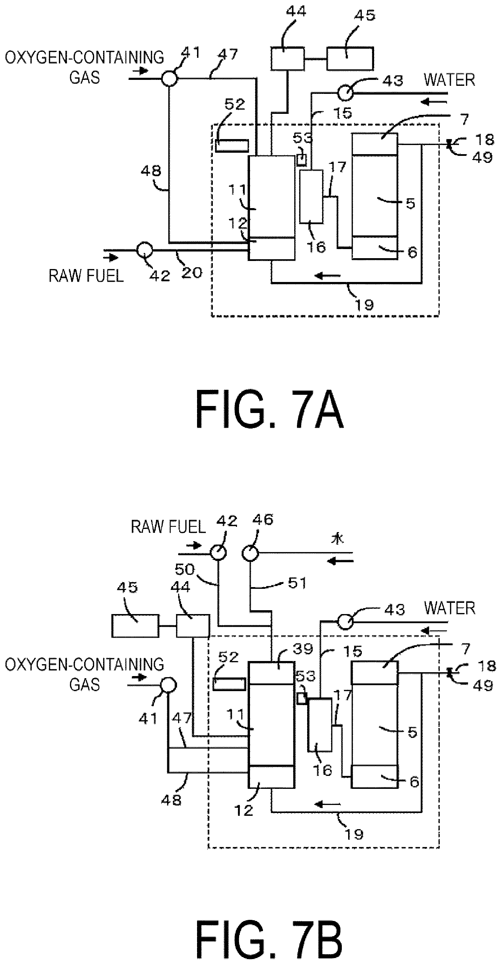

FIGS. 7A and 7B are block diagrams illustrating portions extracted from the configuration of a hybrid system including the hybrid device of the present embodiment. FIG. 7A illustrates a portion extracted from the configuration of the hybrid device 1 illustrated in FIG. 1, and FIG. 7B illustrates a portion extracted from the configuration of the hybrid device 38 illustrated in FIG. 6.

In FIG. 7A, the fuel supply pipe 20 is connected to the manifold 12 of the fuel cell stack device, and a fuel pump 42 is provided upstream of the fuel supply pipe 20. Meanwhile, with regard to the oxygen-containing gas, an oxygen-containing gas distribution passage 47 that supplies an oxygen-containing gas to the outer electrode layers of the fuel cells 10 and an oxygen-containing gas supply pipe 48 connected to the first manifold 12 are provided, and an oxygen-containing gas supply device (blower) 41 is connected on the upstream of the oxygen-containing gas distribution passage 47 and the oxygen-containing gas supply pipe 48. It should be noted that while FIGS. 7A and 7B illustrate examples in which a single oxygen-containing gas supply device 41 causes the oxygen-containing gas to flow to the oxygen-containing gas distribution passage 47 and the oxygen-containing gas supply pipe 48, an oxygen-containing gas supplying device 41 may be provided on each of the oxygen-containing gas distribution passage 47 and the oxygen-containing gas supply pipe 48. Further, to the manifold 12, water vapor may be supplied instead of the oxygen-containing gas.

Meanwhile, a water pump 43 serving as a water supply device is provided on the upstream of a water supply pipe 15 that supplies water to the vaporizer 16. This makes it possible to suitably supply water to the vaporizer 16. Further, the vaporizer 16 and the first manifold 6 of the electrolysis cell stack device are connected by the water vapor inflow pipe 17.

Further, the gas lead-out pipe 18 that leads out the hydrogen-containing gas generated in the electrolysis cell stack device 5, and the gas lead-in pipe 19 for introducing the hydrogen-containing gas to the manifold 12 of the fuel cell stack device are connected to the second manifold 7. It should be noted that, in FIGS. 7A and 7B, a valve 49 is provided in the gas lead-out pipe 18.

Further, an ignition device 52 for combusting the hydrogen-containing gas not used in power generation, and a temperature sensor 53 for measuring the temperature of the fuel cell stack are provided near the fuel cells 10.

In FIG. 7B, in addition to the above-described configuration, a fuel supply pipe 50 that supplies the raw fuel to the reformer 39 is connected, and the fuel pump 42 for supplying the raw fuel is provided upstream of the fuel supply pipe 50. On the other hand, for efficient reformation of water vapor in the reformer 39, a water supply pipe 51 is connected to the reformer 39, and a water pump 46 is provided upstream of the water supply pipe 51.

Then, a current generated in the fuel cell stack device is converted from DC to AC through a power conditioner 44 and then supplied to the outside, and the various pumps and the like are controlled by a controller 45. It should be noted that the controller 45 includes a microcomputer as well as an input/output interface, a CPU, a RAM, and a ROM. Further, the CPU controls the hybrid device, the RAM temporarily stores variables required for program execution, and the ROM stores a program.

It should be noted that the above-described hybrid device is a hybrid module housed in a housing container, and this is indicated by the chain lines in the figures. In the housing container, an insulating material for retaining temperature, a heater for increasing and retaining the temperatures of the electrolysis cell stack device 2 and the fuel cell stack device 3, and the like may be provided.

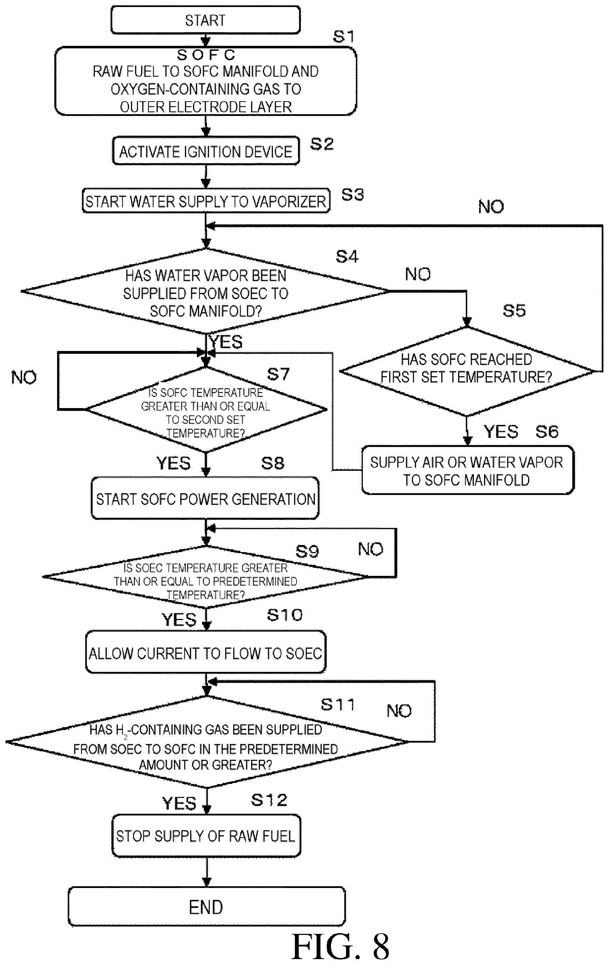

Next, an example of the activation process of the hybrid device 1 of the present embodiment will be described using FIG. 8. In the present embodiment, the activation process refers to a process until the electrolysis reaction can be started in the electrolysis cell stack device, power generation can be started in the fuel cell stack device 3, and a rated operation is possible.

First, when activation of the hybrid device 1 is started, in step S1, a raw fuel such as a city gas or a propane gas is supplied through the fuel supply pipe to the manifold (indicated as "SOFC manifold" in FIG. 8) of the fuel cell stack device. In addition, an oxygen-containing gas is supplied to the outer electrode layer of the fuel cell stack device. Examples of the oxygen-containing gas supply device that supplies the oxygen-containing gas include a blower.

Subsequently, in step S2, the ignition device is activated to combust the raw fuel discharged from the distribution holes 26 of the fuel cells 10. It should be noted that the ignition device need only be disposed above the fuel cell stack device, and examples of the ignition device may include an ignition heater.

Subsequently, in step S3, the water pump is activated to supply water to the vaporizer. It should be noted, at this point in time, the temperature of the fuel cell stack device may not be sufficiently increased, which may fail to vaporize water. Therefore, valves may be provided to the vaporizer and the water vapor inflow pipe, a temperature sensor may be provided to the vaporizer, and control for opening the valves after the temperature measured by the temperature sensor has reached a water vaporization temperature may be performed, for example.

When water is supplied to the vaporizer and water vapor is generated, the water vapor is supplied to the first manifold of the electrolysis cell stack device through the water vapor inflow pipe. The water vapor supplied to the first manifold flows upward through the distribution holes of the electrolysis cells. In this case, the temperature of the electrolysis cell stack device is not sufficiently increased, and therefore the water vapor flowing through the distribution holes of the electrolysis cells flows to the second manifold as water vapor. The water vapor that has flowed through the second manifold is supplied to the manifold of the fuel cell stack device through the gas lead-in pipe. Needless to say, in this case, the valves are controlled to prevent the water vapor from being released to the outside through the gas distribution pipe.

Here, the flow proceeds to step S4 where whether or not the water vapor has been supplied from the electrolysis cell stack device to the manifold of the fuel cell stack device is detected. In other words, whether or not the water has been vaporized in the vaporizer is detected. Examples of the detection method include a method in which a sensor such as a humidity sensor is disposed in the gas lead-in pipe and whether or not water vapor is flowing through the gas lead-in pipe is verified.

Here, when it has been determined that water vapor has not flowed from the electrolysis cell stack device to the manifold of the fuel cell stack device, the flow proceeds to step S5 where whether or not the temperature of the fuel cell stack device is less than a predetermined first set temperature is detected. That is, while the raw fuel is continually supplied to the manifold of the fuel cell stack device and the water vapor has not been supplied to the manifold of the fuel cell stack device, whether or not the fuel cell stack device has reached the first set temperature is detected. Incidentally, the temperature of the fuel cell stack device can be measured by providing a temperature sensor near the fuel cell stack device.

If the temperature of the fuel cell stack device is less than the first set temperature, there is a low possibility that the carbon contained in the raw fuel will precipitate, and therefore the flow returns to step S4 where whether or not the water vapor has been supplied from the electrolysis cell stack device to the manifold of the fuel cell stack device is detected.

On the other hand, if the temperature of the fuel cell stack device is the first set temperature or greater, the possibility that the carbon contained in the raw fuel will precipitate increases. When the carbon precipitates, the performance of the fuel cells deteriorates. Thus, the flow proceeds to step S6 where water vapor and oxygen-containing gas are supplied directly to the manifold of the fuel cell stack device using an auxiliary device (oxygen-containing gas supply device and water vapor supply device) to prevent precipitation of the carbon. It should be noted that the oxygen-containing gas may be supplied by concurrently using, for example, the blower that supplies the oxygen-containing gas to the outer electrode layer of the fuel cell stack device. The direct supply of water vapor and oxygen-containing gas to the manifold of the fuel cell stack device makes it possible to suppress carbon precipitation that is caused by decomposition of the raw fuel. It should be noted that the first set temperature need only be less than the temperature at which carbon precipitation caused by decomposition of the raw fuel is started, and the first set temperature can be suitably set in a range of from 200 to 350°C in accordance with the raw fuel type.

When it is determined that the water vapor has been supplied from the electrolysis cell stack device to the manifold of the fuel cell stack device in step S4, or the water vapor and oxygen-containing gas have been directly supplied to the manifold of the fuel cell stack device in step S6, the flow proceeds to step S7 where whether or not the temperature of the fuel cell stack device is greater than or equal to a second set temperature (temperature allowing power generation to be started) that is greater than the first set temperature is verified.

In step S7, after the temperature of the fuel cell stack device is greater than or equal to the second set temperature (temperature allowing power generation to be started), power generation in the fuel cell stack device is started. It should be noted that the raw fuel can be reformed (that is, internal reformation) by establishing the fuel cells as fuel cells that contain Ni or the like. Further, a reforming catalyst may be disposed in the manifold of the fuel cell stack device. Furthermore, when a reformer that reforms the raw fuel is included, a sufficient reformation reaction can be achieved at this temperature.

After power generation in the fuel cell stack device is started, the temperature of the electrolysis cell stack device 2 is increased by the heat generated by power generation and the combustion heat generated by combusting the hydrogen-containing gas not used in power generation above the fuel cells.

In step S9, whether or not the temperature of the electrolysis cell stack device is greater than or equal to a predetermined temperature (suitably configurable in a range of from 250 to 350°C) that serves as a minimum limit value for oxidation of Ni, which serves as the main component of the cathode and the conductive support body of the electrolysis cells, by water vapor is detected. It should be noted that the temperature of the fuel cell stack device can be measured by disposing a temperature sensor near the fuel cell stack device.

When it is determined that the temperature of the electrolysis cell stack device is less than the predetermined temperature, the flow returns once again to step S9 where measurement of the temperature of electrolysis cell stack device is repeated.

On the other hand, when it is determined that the temperature of the electrolysis cell stack device is the predetermined temperature or greater, the flow proceeds to step S10 where a current is allowed to flow to the electrolysis cell stack device through the end conductive member. It should be noted that this current may be supplied by a so-called system power supply, or a portion of the electrical power generated by the power generation in the fuel cell stack device may be supplied to the electrolysis cell stack device. The current flows to the electrolysis cell stack device, thereby promoting an electrolysis reaction in the electrolysis cells and generating a hydrogen-containing gas. As a result, even if the temperature reaches the temperature at which Ni, the main component of the cathode and the conductive support body of the electrolysis cells, is oxidized by water vapor, it is possible to reduce a risk of oxidation of the material and obtain a hydrogen-containing gas. It should be noted that at least a portion of the hydrogen-containing gas generated by this electrolysis reaction is supplied to the manifold of the fuel cell stack device.

Subsequently, the flow proceeds to step S11 where whether or not the hydrogen-containing gas supplied by the electrolysis cell stack device has been supplied to the manifold of the fuel cell stack device in a predetermined amount or greater is detected. When the hydrogen-containing gas has been supplied to the manifold of the fuel cell stack device in the predetermined amount or greater, raw fuel no longer needs to be supplied through the fuel supply pipe, and therefore the flow proceeds to step S12 where the supply of the raw fuel is stopped.

It should be noted that examples of methods used to detect whether or not the hydrogen-containing gas supplied by the electrolysis cell stack device has been supplied to the manifold of the fuel cell stack device in the predetermined amount or greater include, for example, disposing two pressure sensors on the gas lead-in pipe and detecting the amount of the hydrogen-containing gas on the basis of the difference of the pressures measured by the pressure sensors, and providing a hydrogen sensor in addition to these sensors, detecting the hydrogen concentration, and detecting whether or not the hydrogen-containing gas supplied by the electrolysis cell stack device has been supplied in the predetermined amount or greater on the basis of the amount of the hydrogen-containing gas and the hydrogen concentration information. This predetermined amount may be suitably set in accordance with, for example, the number of fuel cells that constitute the fuel cell stack device, but is preferably at least a minimum flow amount that allows power generation in the fuel cells. It should be noted that, when a reformer is provided, the amount may be suitably set taking into consideration the amount of hydrogen-containing gas generated by the reformer.

With the above-described operation control, the controller need only start normal operation (rated operation) control after the activation processing is completed. That is, the controller only has to suitably control the operation of each device on the basis of the temperatures of the electrolysis cell stack device and the fuel cell stack device, the external load, the necessary amount of hydrogen-containing gas to be discharged from the gas distribution pipe, and the like.

Next, an example of stopping the operation of the hybrid device 1 of the present embodiment will be described.

When stopping the operation of the hybrid device, first the supply of a current to the external load and the electrolysis cell stack device is stopped to terminate the power generation in the fuel cell stack device. This reduces a joule heat of the fuel cell stack device and reduces the temperature of the fuel cell stack device. Additionally, the amounts of the raw fuel and the hydrogen-containing gas supplied to the fuel cell stack device as well as the amount of the raw fuel supplied to the reformer may be decreased. This makes it possible to reduce the temperature of the fuel cell stack device more quickly.

After the supply of a current from the fuel cell stack device is stopped, the amount of current that flows to the fuel cell stack device is decreased so as to retard the electrolysis reaction in the electrolysis cell stack device.

As described above, when the temperature of the fuel cell stack device is a predetermined temperature (first set temperature) or greater, the possibility that the carbon contained in the raw fuel will precipitate increases. Therefore, when the temperature of the fuel cell stack device is the predetermined temperature or greater, water vapor-containing gas is preferably supplied from the electrolysis cell stack device so as to suppress the deterioration of the fuel cells.

Thus, at least until the temperature of the fuel cell stack device is less than the predetermined temperature, the operation of the electrolysis cell stack device preferably continues.

However, when operation of the electrolysis cell stack device in a steady state continues, a gas containing a small amount of water vapor is supplied to the fuel cell stack device. Thus, a gas containing a large amount of water vapor can be supplied to the fuel cell stack device by decreasing the amount of current that flows to the electrolysis cell stack device and suppressing the electrolysis reaction, for example.

It should be noted that, in this case, the amount of water supplied to the vaporizer may also be decreased in accordance with the amount of water vapor supplied to the fuel cell stack device.

Then, after the temperature of the fuel cell stack device is less than the predetermined temperature (first set temperature), the supply of raw fuel and oxygen-containing gas to be supplied to the fuel cell stack device is stopped, the flow of a current to the electrolysis cell stack device is stopped, and the water supply to the vaporizer is stopped.

The controller performs the above-described control, so that the deterioration of the fuel cells can be suppressed and a hybrid system having improved reliability can be achieved.

For example, while the above-described example has been described using vertically striped cells as the electrolysis cells and the fuel cells, so-called horizontally striped cells formed by a plurality of electrolysis element parts and power generating element parts in which the inner electrode layer 22, the solid electrolyte layer 23, and the outer electrode layer 24 are disposed in order on the support body may be used.

### Reference Signs List

1, 29, 30 Hybrid device
2 Electrolysis cell stack device
3 Fuel cell stack device
4 Electrolysis cell
5 Electrolysis cell stack
6 First manifold
7, 31 Second manifold
10 Fuel cell
11 Fuel cell stack
12 Manifold
15 Water supply pipe
16 Vaporizer
17 Water vapor inflow pipe
18 Gas lead-out pipe
19 Gas lead-in pipe
20 Fuel supply pipe
21 Conductive support body
22 Inner electrode layer
23 Solid electrolyte layer
24 Outer electrode layer
26 Distribution hole
32 Space
33 Partitioning member
34 Supply part
35 Collecting part
36 Forward passage side distribution hole
37 Return passage side distribution hole
39 Reformer
40 Raw fuel supply pipe

## Claims

1. A hybrid device (1) comprising:
an electrolysis cell stack device (2) comprising an electrolysis cell stack (5), the electrolysis cell stack (5) comprising a plurality of electrolysis cells (4) that generate a hydrogen-containing gas from a water vapor-containing gas;
a fuel cell stack device (3) disposed adjacent to the electrolysis cell stack device (2) and comprising a fuel cell stack (11), the fuel cell stack (11) comprising a plurality of fuel cells (10); and
a vaporizer (16) for generating the water vapor-containing gas to be supplied to the electrolysis cell stack device (2), wherein
the hybrid device (1) is configured such that at least a portion of the hydrogen-containing gas generated by the electrolysis cell stack device (5) is supplied to the fuel cell stack device (3), and
the vaporizer (16) is disposed in a middle portion of the fuel cell stack (11) in an arrangement direction of the fuel cells (10) and is disposed at a side of the fuel cell stack (11) in the arrangement direction of the fuel cells (10), the side being a side adjacent to the electrolysis cell stack device (2).

2. The hybrid device (1) according to claim 1, wherein
the hybrid device (1) is configured such that at least a portion of current generated by the fuel cell stack device (3) is supplied to the electrolysis cell stack device (2).

3. The hybrid device (2) according to any one of claim 1 or 2, wherein
the electrolysis cells (4) each comprise therein a gas-flow passage that extends from one end to an other end of the electrolysis cell (4); and
the electrolysis cell stack device (2) comprises:
a first manifold (6) that fixes the one ends of the plurality of electrolysis cells (4) and supplies the hydrogen-containing gas to the electrolysis cells (4); and
a second manifold (7) that fixes the other ends of the plurality of electrolysis cells (4) and collects the hydrogen-containing gas generated by the electrolysis cells (4).

4. The hybrid device (2) according to any one of claims 1 to 3, wherein
the electrolysis cells (4) each comprise therein at least two gas-flow passages that extend from one end to an other end of the electrolysis cell (4);
the electrolysis cell stack device (2) comprises:
a first manifold (6) that fixes the one ends of the plurality of electrolysis cells (4); and
a second manifold (7) that fixes the other ends of the plurality of electrolysis cells (4);
the first manifold (6) comprises:
a supply part (34) to which the water vapor-containing gas is supplied; and
a collecting part (35) that collects the hydrogen-containing gas; and
the electrolysis cells (4) each are configured such that at least a portion of the hydrogen-containing gas supplied to the supply part (34) flows through one of the at least two gas-flow passages to the second manifold (7) and flows through an other of the at least two gas-flow passages to the collecting part (35).

5. The hybrid device (2) according to any one of claims 1 to 4, wherein
the fuel cells (10) each comprise therein the gas-flow passage that extends from the one end to the other end of the fuel cell, the fuel cells being configured to combust the excess hydrogen-containing gas not used in power generation on the other end side of the fuel cells; and
a reformer (39) is disposed near the other end side of the fuel cells (10), the reformer (39) reforming a raw fuel to generate the hydrogen-containing gas to be supplied to the fuel cells (10).

6. The hybrid device (2) according to claims 1 to 5, wherein
the fuel cell stack device (3) further comprises:
a manifold (12) that fixes the one ends of the fuel cells; and
a fuel supply pipe (20) connected to the manifold (12), the fuel supply pipe (20) supplying one of the raw fuel and the hydrogen-containing gas.

7. A hybrid system comprising:
the hybrid device (1) according to claim 5 or 6; and
an auxiliary device for supplying one of an oxygen-containing gas and water vapor to the manifold (12) of the fuel cell stack device (3).

8. The hybrid system according to claim 7, further comprising:
a temperature sensor (53) for measuring a temperature of the fuel cell stack device (3); and
a controller (45), the controller (45) being configured to perform control so that, in an activation process, the auxiliary device is activated upon a temperature measured by the temperature sensor (53) reaching to a first set temperature in a state where the raw fuel has been supplied to the manifold (12) of the fuel cell stack device (3) and the water vapor has not been supplied from the electrolysis cell stack device (2) to the manifold (12) of the fuel cell stack device (3).

9. The hybrid system according to claim 8, further comprising:
a fuel supply device for externally supplying one of the raw fuel and the hydrogen-containing gas to one of the reformer (39) and the manifold (12) of the fuel cell stack device (3), wherein
the controller (45) is further configured to perform control so that the fuel supply device is deactivated upon the hydrogen-containing gas supplied from the electrolysis cell stack device (2) to the manifold (12) of the fuel cell stack device (3) being supplied in an amount greater than or equal to a predetermined amount.

10. A hybrid system comprising:
the hybrid device (1) according to claim 5 or 6; and
a controller (45) configured to perform control so that, in a deactivation process of the hybrid device (1), after a supply of current to an external load of the fuel cell stack device (3) is stopped, a supply of current to the electrolysis cell stack device (2) and a supply of water to the vaporizer (16) are stopped after a temperature of the fuel cells (10) decreases to a predetermined temperature or less.

## Patentansprüche

1. Eine Hybridvorrichtung (1), aufweisend:
eine Elektrolysezellenstapelvorrichtung (2), die einen Elektrolysezellenstapel (5) aufweist, wobei der Elektrolysezellenstapel (5) eine Mehrzahl von Elektrolysezellen (4) aufweist, die aus einem wasserdampfhaltigen Gas ein wasserstoffhaltiges Gas erzeugen,
eine Brennstoffzellenstapelvorrichtung (3), die benachbart zu der Elektrolysezellenstapelvorrichtung (2) angeordnet ist und einen Brennstoffzellenstapel (11) aufweist, wobei der Brennstoffzellenstapel (11) eine Mehrzahl von Brennstoffzellen (10) aufweist, und
einen Verdampfer (16) zum Erzeugen des der Elektrolysezellenstapelvorrichtung (2) zuzuführenden wasserdampfhaltigen Gases, wobei
die Hybridvorrichtung (1) derart konfiguriert ist, dass mindestens ein Teil des wasserstoffhaltigen Gases, das von der Elektrolysezellenstapelvorrichtung (5) erzeugt wird, der Brennstoffzellenstapelvorrichtung (3) zugeführt wird, und
der Verdampfer (16) in einem mittleren Abschnitt des Brennstoffzellenstapels (11) in einer Anordnungsrichtung der Brennstoffzellen (10) angeordnet ist und in der Anordnungsrichtung der Brennstoffzellen (10)an einer Seite des Brennstoffzellenstapels (11) angeordnet ist, wobei die Seite eine Seite benachbart zu der Elektrolysezellenstapelvorrichtung (2) ist.

2. Die Hybridvorrichtung (1) gemäß Anspruch 1, wobei
die Hybridvorrichtung (1) derart konfiguriert ist, dass mindestens ein Teil von Strom, der von der Brennstoffzellenstapelvorrichtung (3) erzeugt wird, der Elektrolysezellenstapelvorrichtung (2) zugeführt wird.

3. Die Hybridvorrichtung (2) gemäß irgendeinem von Anspruch 1 oder 2, wobei
die Elektrolysezellen (4) jeweils einen Gasströmungsdurchgang darin aufweisen, der sich von einem Ende zu einem anderen Ende der Elektrolysezelle (4) erstreckt, und
die Elektrolysezellenstapelvorrichtung (2) aufweist:
ein erstes Verteilrohr (6), das die einen Enden der Mehrzahl von Elektrolysezellen (4) fixiert und das wasserstoffhaltige Gas den Elektrolysezellen (4) zuführt, und
ein zweites Verteilrohr (7), das die anderen Enden der Mehrzahl von Elektrolysezellen (4) fixiert und das wasserstoffhaltige Gas sammelt, das von den Elektrolysezellen (4) erzeugt wird.

4. Die Hybridvorrichtung (2) gemäß irgendeinem der Ansprüche 1 bis 3, wobei
die Elektrolysezellen (4) jeweils mindestens zwei Gasströmungsdurchgänge darin aufweisen, die sich von einem Ende zu einem anderen Ende der Elektrolysezelle (4) erstrecken,
die Elektrolysezellenstapelvorrichtung (2) aufweist:
ein erstes Verteilrohr (6), das die einen Enden der Mehrzahl von Elektrolysezellen (4) fixiert, und
ein zweites Verteilrohr (7), das die anderen Enden der Mehrzahl von Elektrolysezellen (4) fixiert,
das erste Verteilrohr (6) aufweist:
einen Zuführteil (34), dem das wasserdampfhaltige Gas zugeführt wird, und
einen Sammelteil (35), der das wasserstoffhaltige Gas sammelt, und
die Elektrolysezellen (4) jeweils derart konfiguriert sind, dass mindestens ein Teil des wasserstoffhaltigen Gases, das dem Zuführteil (34) zugeführt wird, durch einen von den mindestens zwei Gasströmungsdurchgängen hindurch zu dem zweiten Verteilrohr (7) strömt und durch einen anderen von den mindestens zwei Gasströmungsdurchgängen hindurch zu dem Sammelteil (35) strömt.

5. Die Hybridvorrichtung (2) gemäß irgendeinem der Ansprüche 1 bis 4, wobei
die Brennstoffzellen (10) jeweils den Gasströmungsdurchgang darin aufweisen, der sich von dem einen Ende zu dem anderen Ende der Brennstoffzelle erstreckt, wobei die Brennstoffzellen konfiguriert sind, um das überschüssige wasserstoffhaltige Gas, das bei der Energieerzeugung nicht verwendet wird, auf der anderen Endseite der Brennstoffzellen zu verbrennen, und
einen Reformer (39), der nahe bei der anderen Endseite der Brennstoffzellen (10) angeordnet ist, wobei der Reformer (39) einen Rohbrennstoff reformiert, um das den Brennstoffzellen (10) zuzuführende wasserstoffhaltige Gas zu erzeugen.

6. Die Hybridvorrichtung (2) gemäß den Ansprüchen 1 bis 5, wobei
die Brennstoffzellenstapelvorrichtung (3) ferner aufweist:
ein Verteilrohr (12), das die einen Enden der Brennstoffzellen fixiert, und
ein Brennstoffzuführrohr (20), das mit dem Verteilrohr (12) verbunden ist, wobei das Brennstoffzuführrohr (20) eines von dem Rohbrennstoff und dem wasserstoffhaltigen Gas zuführt.

7. Ein Hybridsystem, aufweisend:
die Hybridvorrichtung (1) gemäß Anspruch 5 oder 6, und
eine Hilfsvorrichtung zum Zuführen von einem von einem sauerstoffhaltigen Gas und Wasserdampf zu dem Verteilrohr (12) der Brennstoffzellenstapelvorrichtung (3).

8. Das Hybridsystem gemäß Anspruch 7, ferner aufweisend:
einen Temperatursensor (53) zum Messen einer Temperatur der Brennstoffzellenstapelvorrichtung (3), und
eine Steuereinrichtung (45), wobei die Steuereinrichtung (45) konfiguriert ist, um eine Steuerung durchzuführen, so dass bei einem Aktivierungsvorgang die Hilfsvorrichtung aktiviert wird, sobald eine Temperatur, die von dem Temperatursensor (53) gemessen wird, eine erste Solltemperatur in einem Zustand erreicht, in dem der Rohbrennstoff dem Verteilrohr (12) der Brennstoffzellenstapelvorrichtung (3) zugeführt wurde und der Wasserdampf aus der Elektrolysezellenstapelvorrichtung (2) nicht zu dem Verteilrohr (12) der Brennstoffzellenstapelvorrichtung (3) zugeführt wurde.

9. Das Hybridsystem gemäß Anspruch 8, ferner aufweisend:
eine Brennstoffzuführvorrichtung zum externen Zuführen von einem von dem Rohbrennstoff und dem wasserstoffhaltigen Gas zu einem von dem Reformer (39) und dem Verteilrohr (12) der Brennstoffzellenstapelvorrichtung (3), wobei
die Steuereinrichtung (45) ferner konfiguriert ist, um eine Steuerung durchzuführen, so dass die Brennstoffzuführvorrichtung deaktiviert wird, sobald das wasserstoffhaltige Gas, das von der Elektrolysezellenstapelvorrichtung (2) zu dem Verteilrohr (12) der Brennstoffzellenstapelvorrichtung (3) zugeführt wird, in einer Menge von größer oder gleich einer vorbestimmten Menge zugeführt wird.

10. Ein Hybridsystem, aufweisend:
die Hybridvorrichtung (1) gemäß Anspruch 5 oder 6, und
eine Steuereinrichtung (45), die konfiguriert ist, um eine Steuerung durchzuführen, so dass bei einem Deaktivierungsvorgang der Hybridvorrichtung (1), nachdem ein Zuführen von Strom zu einer externen Last der Brennstoffzellenvorrichtung (3) angehalten wurde, ein Zuführen von Strom zu der Elektrolysezellenstapelvorrichtung (2) und ein Zuführen von Wasser zu dem Verdampfer (16) angehalten werden, nachdem eine Temperatur der Brennstoffzellen (10) auf eine vorbestimmte Temperatur oder weniger absinkt.

## Revendications

1. Un dispositif hybride (1), comportant :
un dispositif d'empilement de cellules d'électrolyse (2) comportant un empilement de cellules d'électrolyse (5), l'empilement de cellules d'électrolyse (5) comportant une pluralité de cellules d'électrolyse (4) qui produisent un gaz contentant de l'hydrogène à partir d'un gaz contenant de la vapeur d'eau ;
un dispositif d'empilement de piles à combustible (3) disposé adjacent au dispositif d'empilement de cellules d'électrolyse (2) et comportant un empilement de piles à combustible (11), l'empilement de piles à combustible (11) comportant une pluralité de piles à combustible (10) ; et
un vaporisateur (16) pour produire le gaz contenant de la vapeur d'eau à être fourni au dispositif d'empilement de cellules d'électrolyse (2), dans lequel
le dispositif hybride (1) est configuré de telle manière qu'au moins une partie du gaz contenant de l'hydrogène produit par le dispositif d'empilement de cellules d'électrolyse (5) est fournie au dispositif d'empilement de piles à combustible (3) ; et
le vaporisateur (16) est disposé dans une partie centrale de l'empilement de piles à combustible (11) dans une direction d'arrangement des piles à combustible (10) et est disposé d'un côté de l'empilement de piles à combustible (11) dans la direction d'arrangement des piles à combustible (10), le côté étant un côté adjacent au dispositif d'empilement de cellules d'électrolyse (2).

2. Le dispositif hybride (1) selon la revendication 1, dans lequel
le dispositif hybride (1) est configuré de telle manière qu'au moins une partie de courant produit par le dispositif d'empilement de piles à combustible (3) est fourni au dispositif d'empilement de cellules d'électrolyse (2).

3. Le dispositif hybride (2) selon l'une quelconque des revendications 1 ou 2, dans lequel
les cellules d'électrolyse (4) comprennent chacune à l'intérieur de celles-ci un passage d'écoulement de gaz qui s'étend d'une extrémité à une autre extrémité de la cellule d'électrolyse (4), et
le dispositif d'empilement de cellules d'électrolyse (2) comprend :
un premier distributeur (6) qui fixe lesdites unes extrémités de la pluralité de cellules d'électrolyse (4) et alimente les cellules d'électrolyse (4) en le gaz contenant de l'hydrogène, et
un deuxième distributeur (7) qui fixe lesdites autres extrémités de la pluralité de cellules d'électrolyse (4) et collecte le gaz contenant de l'hydrogène produit par les cellules d'électrolyse (4) .

4. Le dispositif hybride (2) selon l'une quelconque des revendications 1 à 3, dans lequel
les cellules d'électrolyse (4) comprennent chacune à l'intérieur de celles-ci au moins deux passages d'écoulement de gaz qui s'étendent d'une extrémité à une autre extrémité de la cellule d'électrolyse (4),
le dispositif d'empilement de cellules d'électrolyse (2) comprend :
un premier distributeur (6) qui fixe lesdites unes extrémités de la pluralité de cellules d'électrolyse (4), et
un deuxième distributeur (7) qui fixe les autres extrémités de la pluralité de cellules d'électrolyse (4),
le premier distributeur (6) comprend :
une partie d'alimentation (34) à laquelle le gaz contenant de la vapeur d'eau est fourni, et
une partie collectrice (35) qui collecte le gaz contenant de l'hydrogène ; et
les cellules d'électrolyse (4) sont chacune configurées de telle manière qu'au moins une partie du gaz contenant de l'hydrogène fourni à la partie d'alimentation (34) s'écoule au travers d'un parmi les au moins deux passages d'écoulement de gaz au deuxième distributeur (7) et s'écoule au travers de l'autre parmi les au moins deux passages d'écoulement de gaz à la partie collectrice (35).

5. Le dispositif hybride (2) selon l'une quelconque des revendications 1 à 4, dans lequel
les piles à combustible (10) comprennent chacune à l'intérieur de celles-ci le passage d'écoulement de gaz qui s'étend de ladite une extrémité à ladite autre extrémité de la pile à combustible, les piles à combustible étant configurées de manière à brûler le gaz contenant de l'hydrogène en excès non utilisé dans la production d'énergie de l'autre côté d'extrémité des piles à combustible, et
un reformeur (39) est disposé près de l'autre côté d'extrémité des piles à combustible (10), le reformeur (39) reformant un combustible brut pour produire le gaz contenant de l'hydrogène à être fourni aux piles à combustible (10).

6. Le dispositif hybride (2) selon les revendications 1 à 5, dans lequel
le dispositif d'empilement de piles à combustible (3) comprend en outre :
un distributeur (12) qui fixe lesdites unes extrémités des piles à combustible, et
un tuyau d'alimentation de combustible (20) relié au distributeur (12), le tuyau d'alimentation de combustible (20) fournissant un parmi le combustible brut et le gaz contenant de l'hydrogène.

7. Un système hybride, comportant :
le dispositif hybride (1) selon la revendication 5 ou 6, et
un dispositif auxiliaire pour alimenter le distributeur (12) du dispositif d'empilement de piles à combustible (3) en un parmi un gaz contenant de l'oxygène et la vapeur d'eau.

8. Le système hybride selon la revendication 7, comportant en outre :
un capteur de température (53) pour mesurer une température du dispositif d'empilement de piles à combustible (3), et
un contrôleur (45), le contrôleur (45) étant configuré de manière à effectuer un contrôle, de sorte que lors d'un processus d'activation le dispositif auxiliaire est activé lorsqu'une température mesurée par le capteur de température (53) atteint une première température prescrite dans un état dans lequel le combustible brut a été fourni au distributeur (12) du dispositif d'empilement de piles à combustible (3) et la vapeur d'eau n'a pas été fournie du dispositif d'empilement de cellules d'électrolyse (2) au distributeur (12) du dispositif d'empilement de piles à combustible (3).

9. Le système hybride selon la revendication 8, comportant en outre :
un dispositif d'alimentation de combustible pour alimenter un parmi le reformeur (39) et le distributeur (12) du dispositif d'empilement de piles à combustible (3) de l'extérieur en un parmi le combustible brut et le gaz contenant de l'hydrogène, dans lequel
le contrôleur (45) est en outre configuré de manière à effectuer un contrôle de sorte que le dispositif d'alimentation de combustible est désactivé lorsque le gaz contenant de l'hydrogène fourni du dispositif d'empilement de cellules d'électrolyse (2) au distributeur (12) du dispositif d'empilement de piles à combustible (3) est fourni en une quantité supérieure ou égale à une quantité prédéterminé.

10. Un système hybride, comportant :
le dispositif hybride (1) selon la revendication 5 ou 6, et
un contrôleur (45) configuré de manière à effectuer un contrôle de sorte que, lors d'un processus de désactivation du dispositif hybride (1), après qu'un approvisionnement en courant à une charge externe du dispositif d'empilement de piles à combustible (3) a été arrêté, un approvisionnement en courant au dispositif d'empilement de cellules d'électrolyse (2) et un approvisionnement en eau au vaporisateur (16) sont arrêtés après qu'une température des piles à combustible (10) s'est réduite à une température prédéterminée ou moins.
